# EUROPÄISCHE PATENTSCHRIFT

(11) **EP 3 714 157 B1**
(45) Veröffentlichungstag und Bekanntmachung des Hinweises auf die Patenterteilung: **29.09.2021**
(21) Anmeldenummer: 18810950.8
(22) Anmeldetag: 20.11.2018
(51) Int. Cl.: F03D 1/06, F03D 13/20, F03D 17/00, B29C 70/08

(54) **BAUTEIL FÜR EINE WINDENERGIEANLAGE SOWIE VERFAHREN ZUM HERSTELLEN UND VERFAHREN ZUM PRÜFEN DES BAUTEILS**
COMPONENT FOR A WIND TURBINE SYSTEM AND METHOD FOR MANUFACTURING AND METHOD FOR TESTING THE COMPONENT
ÉLÉMENT STRUCTURAL POUR UN AÉROGÉNÉRATEUR AINSI QUE PROCÉDÉ DE FABRICATION ET PROCÉDÉ DE CONTRÔLE DE L'ÉLÉMENT STRUCTURAL

(30) Priorität: 22.11.2017 DE 102017127635
(43) Veröffentlichungstag der Anmeldung: 30.09.2020
(73) Patentinhaber: Wobben Properties GmbH, 26607 Aurich (DE)
(72) Erfinder: LINK, Torsten, 26506 Norden (DE)
(74) Vertreter: Eisenführ Speiser
(86) Internationale Anmeldenummer: PCT/EP2018/081912
(87) Internationale Veröffentlichungsnummer: WO 2019/101733

(56) Entgegenhaltungen:
- EP-A1- 2 632 699
- EP-A1- 2 681 803
- DE-A1-102016 101 663
- US-A1- 2008 069 699
- US-A1- 2011 135 491

## Beschreibung

Die Erfindung betrifft ein Bauteil für eine Windenergieanlage, das überwiegend aus nichtleitendem Material besteht. Das Bauteil ist beispielsweise ein Halbzeug eines Rotorblatts oder ein Teil eines Rotorblatts, insbesondere eine tragende Komponente eines Rotorblatts wie z.B. ein Holmgurt. Außerdem betrifft die Erfindung ein Verfahren zum Herstellen des Bauteils. Weiter betrifft die Erfindung ein Verfahren zum Prüfen des Bauteils, insbesondere, um bei der Herstellung erzeugte Defekte zu detektieren.

Aus dem Stand der Technik sind Windenergieanlagen hinlänglich bekannt. Die Windenergieanlagen weisen einen Generator auf, der durch einen aerodynamischen Rotor angetrieben wird und so aus dem Wind gewonnene Bewegungsenergie in elektrische Energie umwandelt. Die elektrische Energie wird dann in ein Versorgungsnetz eingespeist.

Eine aufgestellte Windenergieanlage ist eine komplexe Einheit, die aus einer Vielzahl von Bauteilen besteht. Bauteile sind beispielsweise ein Fundament einer Windenergieanlage, ein Turm der Windenergieanlage, eine Gondel der Windenergieanlage, mehrere Rotorblätter des aerodynamischen Rotors, der Generator, die elektrische Einrichtung, um mit dem Generator erzeugte Energie in ein Netz einzuspeisen, sowie deren Einzelteile.

Die überwiegende Mehrheit dieser Bauteile für die Windenergieanlage wird an einem Produktionsort, der unterschiedlich zum späteren Einsatzort ist, vorgefertigt. Am Einsatzort werden die vorgefertigten Bauteile dann mit zusätzlichen erst am Einsatzort erzeugten Bauteilen, wie beispielsweise dem Fundament, zu einer Windenergieanlage zusammengesetzt.

Die Bauteile unterliegen höchsten Qualitätsanforderungen, da nicht nur ein möglichst unterbrechungsfreier Betrieb gewährleistet wird, sondern auch keine Gefahr durch die Windenergieanlage am Einsatzort besteht. Hierbei ist zu berücksichtigen, dass Windenergieanlagen in der Regel an Einsatzorten aufgestellt werden, an denen häufig Winde mit hohen Kräften auftreten. Demnach sind Windenergieanlagen regelmäßig starken Belastungen durch die auftretenden Winde, insbesondere im Fall von Sturmböen, ausgesetzt. Besonders hohe Kräfte wirken hier beispielsweise auf das Fundament, den Turm und den Rotor mit seinen Rotorblättern. Defekt hergestellte Bauteile der Windenergieanlage könnten demnach beim Einsatz, insbesondere verursacht durch starke Sturmböen, brechen oder reißen, sodass hierdurch Teile der Windenergieanlage weggeschleudert werden können und somit eine Gefahr darstellen. Eine Prüfung, insbesondere der Bauteile, die diesen starken Kräften ausgesetzt sind, ist somit essentiell.

Für die Prüfung dieser Bauteile werden häufig Ultraschallverfahren eingesetzt, bei denen mit einem Ultraschallsystem die Bauteile der Windenergieanlage durchleuchtet werden, um die Struktur der Bauteile zu prüfen. Derartige Ultraschallverfahren werden heutzutage beispielsweise bei Rotorblättern eingesetzt. Rotorblätter bestehen aus einer Glasfaserhülle, deren tragende Bauteile z.B. Holmgurte sind. Die Konstruktion der Holme ist hierbei für verschiedene Prüfkriterien durch einfache Sichtprüfung prüfbar. Insbesondere die tieferliegende Anordnung der Glasfasern, also die tragende Struktur der Bauteile, muss jedoch mit den zuvor genannten Ultraschallsystemen geprüft werden, da in einem Verbund aus Glasfasern nicht mehr der Verlauf einzelner Fasern durch Sichtprüfung nachvollziehbar ist.

Die Prüfung mit Ultraschallsystemen ist jedoch sehr langwierig und teilweise schwierig auszuführen. Ultraschallmessköpfe müssen zur Prüfung mit einer vorgeschriebenen Geschwindigkeit über die Oberfläche eines Bauteils, zum Beispiels des Rotorblatts, geführt werden, sodass eine komplette Prüfung eines Rotorblatts, insbesondere dessen Holmgurtes, mehrere Stunden dauern kann. Außerdem muss das Ultraschallsystem mit seinem Ultraschallmesskopf zur Übertragung des Ultraschalls auf das zu prüfende Bauteil durch ein Gel oder eine Flüssigkeit mit dem Bauteil verbunden sein, was das Verfahren zusätzlich sehr aufwendig macht.

In der prioritätsbegründenden deutschen Patentanmeldung hat das Deutsche Patent- und Markenamt die folgenden Dokumente recherchiert: DE 10 2014 214 570 A1, DE 20 2013 007 659 U1 und DE 699 09 306 T2. Die Dokumente DE 10 2016 101 663 A1, EP 2 632 699 A1 und US 2011/0135491 A1 offenbaren eine Schichtung unterschiedlicher Materialien, die stark leitend oder nichtleitend sind, um so eine Qualitätsprüfung eines Windenergieanlagenbauteils mittels Radar zu ermöglichen.

Aufgabe der vorliegenden Erfindung ist es daher, den Problemen des Standes der Technik zu begegnen. Insbesondere soll eine Lösung vorgeschlagen werden, die es ermöglicht, ein Bauteil einer Windenergieanlage mit möglichst geringem Aufwand und hoher Geschwindigkeit zu prüfen. Jedenfalls soll eine Alternative zum Stand der Technik vorgeschlagen werden.

Die vorliegende Erfindung schlägt zunächst ein Bauteil für eine Windenergieanlage vor, wobei das Bauteil überwiegend aus einem nichtleitenden Werkstoff besteht. Der Begriff Werkstoff ist hier nicht auf eine einzelne Werkstoffgruppe beschränkt, sondern umfasst auch Werkstoffe wie beispielsweise Verbundwerkstoffe, nichtmetallisch-anorganische Werkstoffe oder Polymere. Überwiegend nichtleitender Werkstoff bedeutet, dass mindestens mehr als 50 %, vorzugsweise mehr als 75 % und insbesondere mehr als 90 oder 95 % des Bauteils aus einem Werkstoff besteht, der nichtleitend ist. Nichtleitend bedeutet, dass die Stoffe eine Leitfähigkeit von weniger als 10⁻⁸ S·cm⁻¹ bzw. einen spezifischen Widerstand von über 10⁸ Ω·cm aufweist. Die Dielektrizitätszahl der nichtleitenden Stoffe beträgt vorzugsweise Werte im Bereich von 1-14.

Das Bauteil weist neben dem nichtleitenden Werkstoff in das Bauteil eingebrachte elektrisch leitende Fasern auf. Eine Faser ist ein längliches Gebilde, das im Verhältnis zur Länge einen wesentlich geringeren Querschnitt aufweist. Hierdurch ist eine Faser üblicherweise auch flexibel.

Erfindungsgemäß sind die elektrisch leitenden Fasern derart im Werkstoff angeordnet, dass ihre Positionen und/oder ihre Formen und/oder ihre Verteilung, insbesondere auch ihre Konzentration, Häufigkeit und/oder Dichte, abhängig von der Position und/oder Form und/oder Verteilung zumindest eines Teils des nichtleitenden Werkstoffs sind und so die Position und/oder Form und/oder Verteilung des Teils des nichtleitenden Werkstoffs anzeigen.

Gemäß der Erfindung sind also leitende Fasern derartig im Bauteil, das ansonsten überwiegend aus einem nichtleitenden Werkstoff besteht, in einer vorbestimmten Weise verteilt, sodass durch ihre Anordnung auch auf die Anordnung des nichtleitenden Werkstoffs im Bauteil geschlossen werden kann. Hierdurch ist es möglich, das Bauteil mit einem Verfahren zu durchleuchten, das leitende Bauteile detektiert. Hierzu sei beispielsweise ein Radarverfahren genannt.

Es ist also möglich, mittels Radar die Positionen und/oder Formen und/oder Verteilung der leitenden Fasern zu detektieren und aufgrund der Anordnung, also des Musters oder der Struktur der leitenden Fasern, also durch die Positionen, Formen und/oder ihre Verteilung, die Struktur, das Muster oder die Anordnung des nichtleitenden Werkstoffs durch die Abhängigkeit zu prüfen. Mittels eines Radarverfahrens lassen sich somit beispielsweise Lufteinschlüsse im nichtleitenden Werkstoff oder ungewünschte Verformungen des nichtleitenden Werkstoffs identifizieren.

Gemäß einer ersten Ausführungsform ist das Bauteil ein Halbzeug, insbesondere ein Teil eines Rotorblatts, wie eine Halbschale oder ein Holmgurt eines Rotorblatts oder ein Teil einer Halbschale eines Rotorblatts einer Windenergieanlage. Der nichtleitende Werkstoff umfasst hierbei Glasfasern und den die Fasern umgebenden Kunststoff. Alternativ sind dies z.B. auch Schaumstoffe oder Balsaholz, die im Rotorblattbau verwendet werden. Alternativ ist das Bauteil ein Fundament für die Windenergieanlage, und der nichtleitende Werkstoff umfasst Beton. Gemäß einer weiteren Alternative dieser Ausführungsform ist das Bauteil ein Rotorblatt und der nichtleitende Werkstoff umfasst Glasfasern sowie einen Klebstoff zum Verbinden zweier Halbschalen des Rotorblatts. Alternativ können auch Halbzeuge geprüft werden, die noch nicht mit Harz zu einem Glasfaserverbundwerkststoff zusammengefügt wurden. All diese Bauteile für Windenergieanlagen weisen besonders große Oberflächen auf, die mit den herkömmlichen Ultraschallsystemen nur sehr langsam zu prüfen waren. Aufgrund des Einbringens der leitenden Fasern in diese Bauteile ist eine schnellere Prüfung derartiger Bauteile möglich.

Gemäß einer weiteren Ausführungsform sind die leitenden Fasern Metalldrähte, mit einem leitenden Material versehene oder beschichtete Glasfasern oder Kohlenstofffasern. Metalldrähte sind vorzugsweise Golddrähte. Derartige Fasern sind günstig und in großer Zahl verfügbar. Gleichzeitig erzeugen derartige leitende Fasern durch ihre gute elektrische Leitfähigkeit ein gut detektierbares Radarecho.

Gemäß einer weiteren Ausführungsform weisen die leitenden Fasern einen Durchmesser von weniger als 1 mm, vorzugsweise weniger als 100 µm oder besonders bevorzugt weniger als 50 µm auf. Gemäß einer weiteren Ausführungsform weisen die Fasern eine Länge von weniger als 2 cm, vorzugsweise weniger als 1 cm auf.

Durch den geringen Durchmesser und/oder die geringe Länge, insbesondere unter Beachtung einer entsprechenden Konzentration und/oder Dichte, der Fasern wird verhindert, dass weiter oben in einem Bauteil angeordnete leitende Fasern darunterliegende leitende Fasern ganz oder größtenteils in einem Radarcheo verdecken. Eine bessere Prüfung des Bauteils im Hinblick auf die Position, Form und/oder Verteilung eines Teils des nichtleitenden Werkstoffs im Hinblick auf seine Tiefe mit einem Radar wird somit gewährleistet.

Alternativ ist es auch möglich, durch die Zugabe der leitenden Fasern nur in tieferliegenden Schichten der Bauteile nur diese deutlich zu erkennen, wobei die darüberliegenden Bauteile nicht erfasst oder betrachtet werden.

Gemäß einer weiteren Ausführungsform ist der nichtleitende Werkstoff oder zumindest ein Teil davon von der Art von Werkstoffen, die vor dem Verarbeiten zum Fertigstellen des Bauteils, nämlich insbesondere einem Aushärten, durch Ausüben einer Kraft formbar sind, wobei diese Verformbarkeit insbesondere eine plastische Verformbarkeit ist oder der Werkstoff oder der Teil davon ein viskoses Verhalten aufweist. Außerdem ist der nichtleitende Werkstoff oder der Teil davon von der Art von Werkstoffen, die nach dem Verarbeiten, insbesondere durch Aushärten, zum Herstellen des Bauteils fest, insbesondere elastisch verformbar und/oder brechbar, also z.B. spröde, ist.

Der Werkstoff oder der Teil des Werkstoffs ist also zunächst vor dem Verarbeiten, insbesondere einem Aushärten, verformbar und ist durch einen Schritt beim Herstellen oder Verarbeiten in einen festen Zustand überführbar, in dem der Werkstoff oder der Teil davon nur noch elastisch verformbar und/oder brechbar ist.

Bauteile, die aus diesen zuletzt genannten Werkstoff hergestellt sind, weisen beim Übergang vom formbaren Zustand zum festen Zustand häufig Veränderungen im Hinblick auf ihre Struktur auf, die vorteilhafterweise mit den eingebrachten leitenden Fasern, die sich zusammen mit dem Werkstoff oder dem Teil davon verformen, nachvollzogen werden können. Anhand der leitenden Fasern ist somit ein beim Aushärten entstandener Defekt eines nichtleitenden Werkstoffs durch eine ungewünschte Strukturänderung detektierbar.

Außerdem betrifft die Erfindung ein Verfahren zum Herstellen eines Bauteils, insbesondere nach einer der vorgenannten Ausführungsformen. Bei der Herstellung eines Bauteils, das überwiegend aus einem nichtleitenden Werkstoff besteht, werden in dem Werkstoff oder zumindest in einen Teil davon elektrisch leitende Fasern angeordnet. Hierbei werden die leitenden Fasern derart angeordnet, dass ihre Positionen und/oder Formen und/oder ihre Verteilung, insbesondere durch ihre lokale Konzentration, Häufigkeit und/oder Dichte, abhängig von der Position und/oder Form und/oder Verteilung mindestens eines Teils des nichtleitenden Werkstoffs ist.

Veränderungen der Struktur des nichtleitenden Werkstoffs ziehen durch die Abhängigkeit somit eine Veränderung der Positionen und/oder Formen und/oder der Verteilung der leitenden Fasern nach sich. Durch Detektion der leitenden Fasern, beispielsweise mittels eines Radarprüfverfahrens, kann somit auf die Struktur des nichtleitenden Werkstoffs oder zumindest eines Teils davon geschlossen werden.

Gemäß einer ersten Ausführungsform des Verfahrens zum Herstellen des Bauteils umfasst der nichtleitende Werkstoff ein Gemisch zum Erzeugen von Beton aus dem Gemisch und/oder einen verflüssigten Klebstoff, der aushärtbar ist. Mit dem nichtleitenden Werkstoff werden zur Herstellung des Bauteils die leitenden Fasern vermischt, bis eine vordefinierte Mischgüte, insbesondere der Fasern im Gemisch, erreicht wird. Die vordefinierte Mischgüte wird z.B. experimentell vordefiniert. Beispielsweise wird für unterschiedliche Mengen jeweils eine Mischzeit mit vordefinierten Mischmitteln vorbestimmt. Die vordefinierte Mischgüte ist hierbei so vordefiniert, dass von einer im Wesentlichen gleichmäßigen Verteilung der elektrischen Fasern auszugehen ist.

Hierdurch ist bei der weiteren Herstellung des Bauteils nach Verfestigen oder Aushärten des nichtleitenden Werkstoffs von einer vordefinierten gleichmäßigen Verteilung der leitenden Fasern im nichtleitenden Werkstoff auszugehen. Wird nun die Verteilung der leitenden Fasern nach dem Aushärten oder Verfestigen des nichtleitenden Gemischs beispielsweise durch ein Radarsystem detektiert, so können Stellen, in denen verhältnismäßig weniger oder mehr der leitenden Fasern angeordnet sind, als Defektstellen identifiziert werden, an denen nämlich verhältnismäßig weniger oder mehr von dem nichtleitenden Werkstoffs vorhanden ist.

Gemäß einer weiteren Ausführungsform wird die Mischgüte zum vorgenannten Vermischen durch ein Radarsystem bereits beim Mischen oder zumindest vor dem Aushärten bestimmt. Hierbei kann die Mischgüte dank der leitenden Fasern sicher festgestellt werden.

Gemäß einer weiteren Ausführungsform werden zum Herstellen des Bauteils, das ein Rotorblatt oder ein Rotorblattteil, insbesondere einer Rotorblatthalbschale oder ein tragender Holmgurt, ist, Glasfasern, die Bestandteil des nichtleitenden Werkstoffs sind, in einer vordefinierten Position zueinander angeordnet. Dies erfolgt vorzugsweise in oder mithilfe einer Rotorblattform. Zusätzlich werden leitende Fasern, insbesondere Metalldrähte, mit einem leitfähigen Material versehene oder beschichtete Glasfasern oder Kohlenstofffasern zwischen den übrigen Glasfasern, insbesondere in der Form, angeordnet. Die Glasfasern sowie die leitenden Fasern werden dann mit einem Klebstoff in ein festes Bauteil überführt, das elastisch verformbar und/oder brechbar ist. Der Klebstoff ist insbesondere ein Harz, vorzugsweise ein Epoxid-Harz, das vorzugsweise durch Aminhärter aushärtbar ist, wobei der Klebstoff ebenfalls vorzugsweise Bestandteil des nichtleitenden Werkstoffs ist.

Glasfasern, die sich beim Aushärten verformen, beispielsweise durch Wärmeausdehnung oder mechanische weitere Einwirkungen, verursachen somit auch eine Verformung der im Verbund liegenden leitenden Fasern. Derartige Verformungen der Glasfasern sind somit durch Detektion der Verformung einer leitenden Faser mit einem Radarsystem detektierbar.

Gemäß einer weiteren Ausführungsform werden die Glasfasern gemäß der zuvor genannten Ausführungsform vor dem Anordnen zu Bündeln gewickelt, wobei die Bündel in vordefinierten Positionen zueinander angeordnet werden. In mehreren oder allen der Bündel wird zusätzlich zu den Glasfasern mindestens eine leitende Faser beim Herstellen eines Bündels mit eingewickelt.

Hierdurch ist eine unmittelbare Abhängigkeit der Verformung der leitenden Faser von einer oder mehreren Glasfasern des gleichen Bündels, die nicht leitend sind, gewährleistet. Zusätzlich kann bereits beim Wickeln der Bündel die Wickelgüte mit einem Radarsystem überwacht werden.

Außerdem betrifft die Erfindung ein Verfahren zum Prüfen eines Bauteils einer Windenergieanlage nach einer der vorgenannten Ausführungsformen, das insbesondere durch ein Verfahren nach einer der vorgenannten Ausführungsformen hergestellt ist. Gemäß dem Verfahren wird die Position, Form und/oder Verteilung, insbesondere auch die lokale Konzentration, Häufigkeit und/oder Dichte, von leitenden Fasern im Bauteil, vorzugsweise mit einem Radarsystem, detektiert. Durch Detektion der Anordnung oder Struktur der leitenden Fasern im Bauteil können somit Defekte im Bauteil einfacher identifiziert werden.

Gemäß einer Ausführungsform des Verfahrens umfasst das Prüfen der Struktur eines Bauteils zunächst das Senden von Radarstrahlen auf das Bauteil und das Erfassen von Radarreflexionen vom Bauteil mit einem Radarsystem. Die Radarreflexionen zeigen die Anordnung, also die Position, Form und/oder Verteilung der leitenden Fasern im Bauteil an, wobei die Anordnung der leitenden Fasern wiederum die Anordnung des nichtleitenden Werkstoffs oder eines Teils davon anzeigt.

Gemäß einer weiteren Ausführungsform werden zur Prüfung des Bauteils die Radarreflexion eines Teils des Bauteils oder die Anordnung der leitenden Fasern in einem Teil des Bauteils mit hinterlegten erwarteten Reflexionen oder erwarteten Anordnungen leitender Fasern verglichen. Im Falle eines Übereinstimmungsgrads des Vergleichs unterhalb eines ersten Schwellenwerts wird das Bauteil als fehlerhaft bewertet.

Eine einfache automatisierte Prüfung des Bauteils ist somit möglich, wobei hierfür Bildverarbeitungsverfahren verwendet werden können.

Gemäß einerweiteren Ausführungsform wird das Bauteil mit einem polarimetrischen Radar geprüft. Hierbei sendet und empfängt das Radar horizontal und vertikal polarisierte elektromagnetische Wellen aus, um noch besser die Form der leitenden Fasern zu erkennen.

Außerdem umfasst die Erfindung die Verwendung einer leitenden Faser in einem Bauteil, das überwiegend aus einem nichtleitenden Werkstoff besteht, um Radarreflexionen zur Prüfung des Bauteils zu erzeugen.

Weitere Ausführungsformen ergeben sich anhand der in den Figuren näher erläuterten Ausführungsbeispiele. Hierbei zeigen:
- Fig. 1: eine Windenergieanlage,
- Fig. 2: eine Seitenansicht einer Rotorblattform,
- Fig. 3: eine Draufsicht auf eine Rotorblattform,
- Fig. 4: einen Schnitt durch ein Rotorblatt zur Darstellung der Holmgurte,
- Fig. 5: die Schritte zum Herstellen eines Rotorblatts,
- Fig. 6: ein Fundament einer Windenergieanlage,
- Fig. 7: die Schritte zum Herstellen des Fundaments,
- Fig. 8: ein Rotorblatt einer Windenergieanlage bei der Prüfung und
- Fig. 9: die Schritte zum Prüfen eines Bauteils für eine Windenergieanlage.

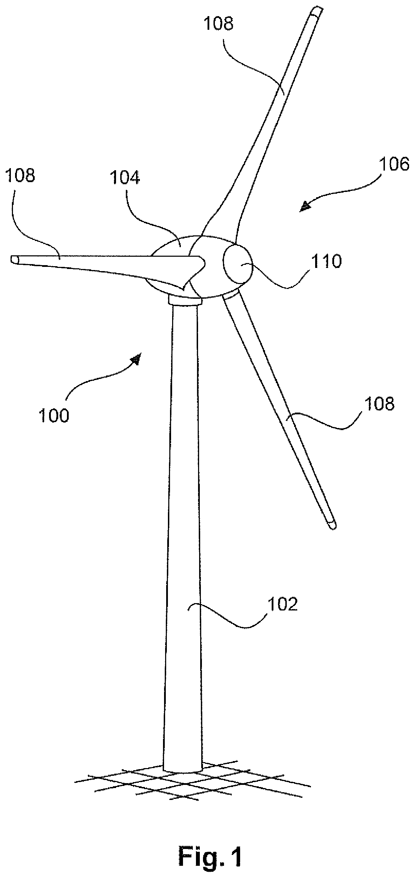

Fig. 1 zeigt eine schematische Darstellung einer Windenergieanlage 100 gemäß einem Ausführungsbeispiel der Erfindung. Die Windenergieanlage 100 weist eine Vielzahl von Bauteilen auf. Beispiele für die Bauteile sind ein Turm 102 und eine Gondel 104 auf dem Turm 102. An der Gondel 104 ist ein aerodynamischer Rotor 106 mit drei Rotorblättern 108 und einem Spinner 110 vorgesehen. Der aerodynamischer Rotor 106, die Rotorblätter 108 und der Spinner 110 können ebenfalls als Bauteile bezeichnet werden.

Der aerodynamische Rotor 106 wird im Betrieb der Windenergieanlage durch den Wind in eine Drehbewegung versetzt und dreht somit auch einen elektrodynamischen Rotor oder Läufer eines Generators, weicher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

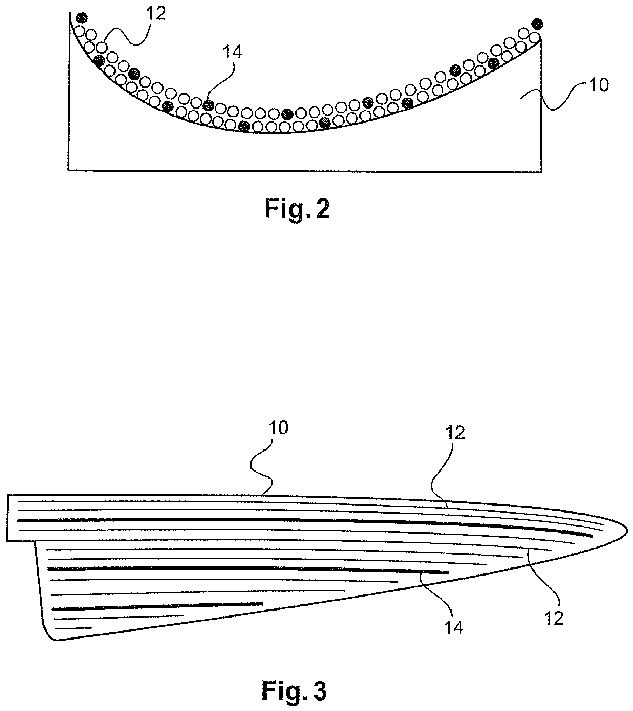

Fig. 2 zeigt eine Rotorblattform 10 im Querschnitt. Die Rotorblattform 10 dient zum Herstellen einer Halbschale eines Rotorblatts 108 für eine Windenergieanlage 100. Die Halbschale kann auch als Bauteil für eine Windenergieanlage bezeichnet werden. Zur Herstellung wird in die Form 10 ein nichtleitender Werkstoff 12, hier Glasfasern, in Längsrichtung eingelegt. Neben den Glasfasern sind einige elektrisch leitende Fasern 14, nämlich z.B. Metalldrähte oder Kohlefasern, in die Rotorblattform 10 eingebracht. Somit wird das Bauteil mit einem überwiegend nichtleitenden Werkstoff 12, nämlich den Glasfasern, sowie mit elektrisch leitenden Fasern 14, nämlich den Metalldrähten, hergestellt. Die Metalldrähte, also die elektrisch leitenden Fasern 14, sind hierbei so positioniert, dass ihre Positionen und/oder Formen abhängig von den Positionen und/oder Formen des nichtleitenden Werkstoffs 12, nämlich der Glasfasern 12, sind.

Insbesondere wird zur weiteren Herstellung einer Halbschale eines Rotorblatts 108 eine Folie über die hier dargestellten Lagen der Glasfasern gelegt und das Volumen innerhalb der Folie vakuumiert, während ein Klebstoff innerhalb der Folie eingebracht ist, um die Glasfasern und die leitenden Fasern 14 im Vakuum miteinander zu verkleben. Die durch das Vakuumieren entstehenden Kräfte können dafür sorgen, dass eine oder mehrere der Glasfasern sich verformen oder ihre Position verändern. Innerhalb des Vakuums ist auf Grund der im Verbund liegenden Fasern jedoch nur ein begrenzter Platz vorhanden, sodass mehrere andere Glasfasern und auch wenigstens eine der leitenden Fasern in einem derartigen Fall mit verschoben werden. Durch die Verformung oder Verschiebung der Position des Metalldrahts kann dann auf eine verschobene oder verformte Glasfaser geschlossen werden. Die Form oder Position des Metalldrahts lässt sich nach der Fertigung im Verbund der Glasfasern durch ein Radarsystem bestimmen.

Fig. 2 ist eine schematische Darstellung einer Rotorblattform. Verhältnismäßig sind auch die Glasfasern gegenüber den Maßen der Form 10 besonders dick, also mit einem besonders großen Durchmesser, dargestellt. Gleiches gilt für die Metalldrähte. Dies dient hier nur zur besseren Darstellung. Tatsächlich sind auch mehr als die hier dargestellten Lagen üblich. Gegenüber den hier dargestellten zwei Lagen weisen Rotorblatthalbschalen üblicherweise mehr als zwei Lagen von Glasfasern auf, wobei die Darstellung hier nur zur besseren Übersicht gewählt ist.

Fig. 3 zeigt die Ansicht der Rotorblattform 10 von oben. Hier ist erneut der nichtleitende Werkstoff 12, nämlich die Glasfasern, sowie die leitenden Fasern 14, nämlich z.B. die Metalldrähte oder Kohlefasern, dargestellt. Die leitenden Fasern 14 sind hier als vergleichsweise dickere Streifen als die Glasfasern dargestellt, wobei die leitenden Fasern 14 auch dünner sein können, also beispielsweise einen geringeren Durchmesser aufweisen können als die Glasfasern. Die breitere Darstellung der leitenden Fasern 14 gegenüber den Glasfasern dient hier nur zur Verdeutlichung und zur Unterscheidung zwischen den Glasfasern und den leitenden Fasern 14. In der Darstellung in Fig. 3 ist somit lediglich schematisch die oberste Lage von Glasfasern und Metalldrähten in der Rotorblattform 10 erkennbar.

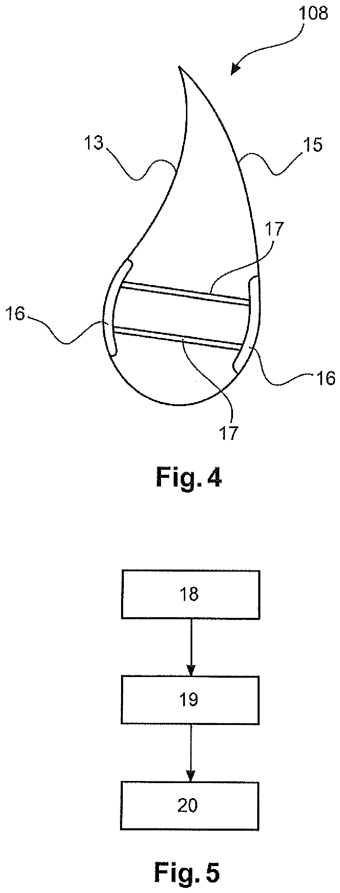

Fig. 4 zeigt einen Schnitt durch ein Rotorblatt 108, das eine Druckseite 13 und eine Saugseite 15 umfasst. Auf der Druckseite 13 ist innerhalb der Rotorblatthalbschalen, also innerhalb der Hülle des Rotorblatts, auf der Druckseite 13 ein Holmgurt 16 und auf der Saugseite ein weiterer Holmgurt 16 angeordnet. Die Holmgurte 16 sind durch Stege 17 voneinander beabstandet. Die Holmgurte 16 und die Stege 17 bilden das tragende Element für die Rotorblatthülle. Auch die Holmgurte 16 sind als Bauteile im Sinne der Erfindung zu verstehen. Demnach Bestehen die Holmgurte 16 überwiegend aus einem nichtleitenden Werkstoff 12, in den hier nicht dargestellte elektrisch leitende Fasern 14 eingebracht sind.

Fig. 5 zeigt die Schritte zum Herstellen eines Bauteils, nämlich einer Rotorblatthalbschale oder eines Holmgurtes 16 eines Rotorblatts 108, für eine Windenergieanlage 100. In einem Schritt 18 zur Herstellung werden elektrisch leitende Fasern 14, nämlich z.B. Kohlefasern oder Metalldrähte, in einem nichtleitenden Werkstoff 12, der formbar ist, nämlich Glasfasern, in vorbestimmter Weise angeordnet. In einem Schritt 19 wird der nichtleitende Werkstoff mit einem Harz verklebt, wobei dann in einem Schritt 20 die Anordnung der leitenden Fasern 14 detektiert wird und dadurch zumindest auf die Anordnung eines Teils des nichtleitenden Werkstoffs 12 geschlossen werden kann.

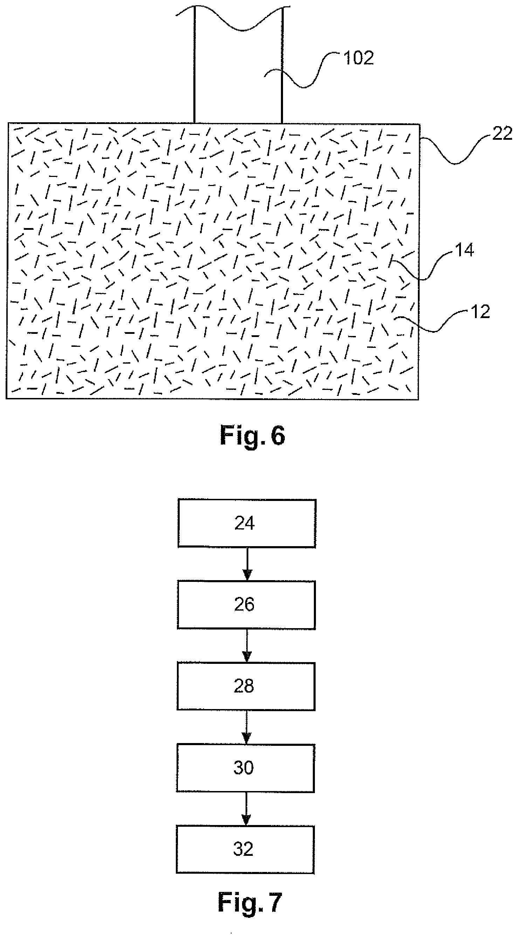

Fig. 6 zeigt ein Fundament 22 einer Windenergieanlage 100. Das Fundament 22 entspricht einem weiteren Bauteil. Das Fundament 22 besteht aus einem Mineralgemisch, nämlich einem Gemisch zum Bilden von Beton. In das Gemisch, das im Wesentlichen aus einem nichtleitenden Werkstoff besteht, sind elektrisch leitende Fasern 14 eingebracht. Außerdem umfasst das Fundament eine hier nicht dargestellte leitende Armierung aus Eisen.

In Fig. 6 ist eine gleichmäßige Verteilung der elektrisch leitenden Fasern 14 zu erkennen. Diese gleichmäßige Verteilung der elektrisch leitenden Fasern 14 im ansonsten nichtleitenden Material kann mit einem Radar detektiert werden, sodass aufgrund der Verteilung der elektrisch leitenden Fasern 14 im nichtleitenden Material 12 auf die Verteilung des nichtleitenden Materials 12 geschlossen werden kann. Lufteinschlüsse wären detektierbar.

Fig. 7 zeigt die Schritte zum Herstellen eines Bauteils, nämlich eines Fundaments 22, wie es in Fig. 6 dargestellt ist. Hierzu wird in einem Schritt 24 ein Gemisch aus nichtleitendem Werkstoff 12 mit elektrisch leitenden Fasern vermischt. Im Schritt 26 wird die Mischgüte geprüft. Dies kann beispielsweise mit einem Radarsystem erfolgen. Im Schritt 28 wird das Gemisch in eine vorbestimmte Form zum Bilden des Fundaments eingefüllt. Im Schritt 30 härtet das Material zu Beton aus, und im Schritt 32 wird erneut mit einem Radargerät geprüft, ob sich der nichtleitenden Werkstoff 12 gleichmäßig verteilt hat. Dies wird durch Bestimmen der Positionen, der Formen und/oder der Verteilung der leitenden Fasern mit einem Radargerät durchgeführt.

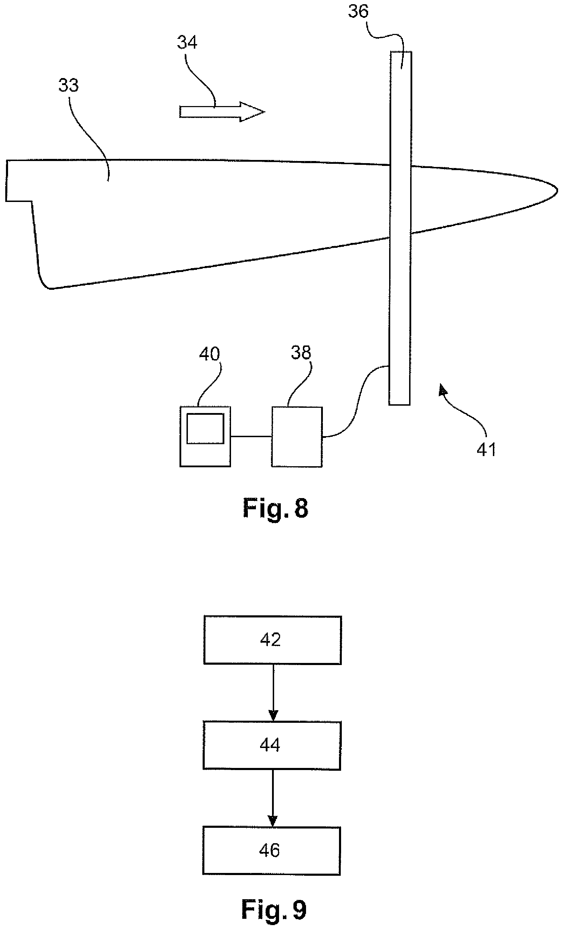

Fig. 8 zeigt ein Verfahren zum Prüfen eines Bauteils einer Windenergieanlage. Das Bauteil ist hier eine Halbschale 33 eines Rotorblatt 108, das in Richtung 34 durch einen Radarprüfkopf 36 geschoben wird. Mit dem Radarprüfkopf 36 werden Radarwellen auf die Halbschale 33 gesendet und Reflexionen detektiert. Die Reflexionen werden mit einer Rechnereinheit 38 aufgezeichnet und mit einem Monitor 40 dargestellt. Radarprüfkopf 36, Rechnereinheit 38 und Monitor 40 sind Teile eines Radarsystems 41. Alternativ zum als Halbschale 33 dargestellten Bauteil wird gemäß einem anderen Ausführungsbeispiel, das hier nicht dargestellt ist, ein Holmgurt 16 in Richtung 34 durch einen Radarprüfkopf 36 geschoben oder gefördert, um dem Holmgurt 16 zu prüfen.

Auf dem Monitor 40 sind durch Auswertung mit der Rechnereinheit 38 die Positionen elektrisch leitender Fasern 14, die zuvor in das Bauteil, hier die Halbschale 33, eingebracht wurden, zu erkennen. Diese Positionen oder Formen oder auch die Verteilung wird von der Rechnereinheit 38 mit vordefinierten Formen, Positionen und/oder Verteilungen verglichen und anhand dieser Verteilungen, Formen und/oder Positionen von der Rechnereinheit 38 bestimmt, ob das Bauteil fehlerfrei oder fehlerhaft ist.

Fig. 9 zeigt die Schritte des Verfahrens zum Prüfen eines Bauteils einer Windenergieanlage. In einem Schritt 42 werden vorzugsweise mit einem Radarsystem 41 die Anordnung, Form und/oder Position von leitenden Fasern 14 im Bauteil detektiert, Im Schritt 44 werden diese Positionen, Formen und/oder die Verteilung mit einer vordefinierten Position, Form oder Verteilung verglichen und im Schritt 46 in Abhängigkeit des Übereinstimmungsgrads das Bauteil als fehlerhaft oder nicht fehlerhaft bewertet.

## Patentansprüche

1. Bauteil für eine Windenergieanlage (100), wobei das Bauteil (108, 22, 33) überwiegend aus einem nichtleitenden Werkstoff (12) besteht und das Bauteil (108, 22, 33) neben dem überwiegend nichtleitenden Werkstoff (12) in das Bauteil eingebrachte elektrisch leitende Fasern (14) aufweist, wobei die elektrisch leitenden Fasern (14) derart im Werkstoff (12) angeordnet sind, dass ihre Positionen und/oder Formen und/oder ihre Verteilung, insbesondere auch ihre lokale Konzentration, Häufigkeit und/oder Dichte, abhängig von der Position und/oder Form und/oder Verteilung zumindest eines Teils des nichtleitenden Werkstoffs (12) sind.

2. Bauteil nach Anspruch 1, wobei das Bauteil
- ein Halbzeug, insbesondere ein Teil eines Rotorblatts (108), bevorzugt eine Halbschale (33) oder ein Holmgurt (16) eines Rotorblatts (108), einer Windenergieanlage ist und der nichtleitende Werkstoff (12) Glasfasern und vorzugsweise einen die Glasfasern umgebenden Kunststoff, Schaumstoff und/oder Balsaholz umfasst oder
- ein Fundament (22) für die Windenergieanlage (100) ist und der nichtleitende Werkstoff (12) Beton umfasst oder
- ein Rotorblatt (108) ist und der nichtleitende Werkstoff (12) Glasfasern und einen Klebstoff zum Verbinden zweier Halbschalen des Rotorblatts (108) umfasst.

3. Bauteil nach Anspruch 1 oder 2, wobei die leitenden Fasern (14) Metalldrähte, mit einem leitenden Material versehene oder beschichtete Glasfasern oder Kohlenstofffasern sind.

4. Bauteil nach einem der vorhergehenden Ansprüche, wobei die leitenden Fasern (14) einen Durchmesser von weniger als 1 mm, vorzugsweise weniger als 100 µm oder besonders bevorzugt weniger als 50 µm aufweisen, und/oder die leitenden Fasern (14) eine Länge von weniger als 2 cm, vorzugsweise weniger als 1 cm, aufweisen.

5. Bauteil nach einem der vorhergehenden Ansprüche, wobei der nichtleitende Werkstoff (12) oder zumindest ein Teil davon von der Art von Werkstoffen ist, die vor dem Verarbeiten zum Fertigstellen des Bauteils, insbesondere vor dem Aushärten, durch eine Kraft formbar, insbesondere plastisch formbar, ist und nach dem Verarbeiten zum Herstellen des Bauteils, insbesondere nach dem Aushärten, fest, insbesondere elastisch verformbar und/oder brechbar ist.

6. Verfahren zum Herstellen eines Bauteils (108, 22, 33) nach einem der Ansprüche 1 bis 5, wobei bei der Herstellung elektrisch leitende Fasern (14) derart in einem nichtleitenden Werkstoff (12), der formbar ist, angeordnet werden, sodass ihre Positionen und/oder Formen und/oder ihre Verteilung nach dem Verfestigen des nichtleitenden Werkstoffs (12) die Position und/oder die Form und/oder die Verteilung zumindest eines Teils des nichtleitenden Werkstoffs (12) anzeigt.

7. Verfahren nach Anspruch 6, wobei zum Herstellen des Bauteils (108, 22, 33) ein Gemisch aus nichtleitendem Werkstoff (12), insbesondere ein Gemisch zum Herstellen von Beton oder ein flüssiger Klebstoff, der aushärtbar ist, mit den leitenden Fasern vermischt wird, bis eine vordefinierte Mischgüte der Fasern (14) im Gemisch erreicht wird.

8. Verfahren nach Anspruch 7, wobei die Mischgüte durch ein Radarsystem (41) bestimmt wird.

9. Verfahren nach Anspruch 6, wobei das Bauteil (108, 22, 33) ein Rotorblatt (108), ein Rotorblattteil, insbesondere eine Rotorblatthalbschale (33) oder ein Holmgurt (16), ist und Glasfasern als Bestandteil des nichtleitenden Werkstoffs (12) in einer vordefinierten Position zueinander, insbesondere in oder mithilfe einer Form (10), angeordnet werden, wobei zusätzlich leitende Fasern (14), insbesondere Metalldrähte, mit einem leitfähigen Material versehene oder beschichtete Glasfasern oder Kohlenstofffasern, an vordefinierten Positionen der Glasfasern, insbesondere in der Form (10), angeordnet werden und die Glasfasern sowie die leitenden Fasern mit einem Klebstoff in ein festes Bauteil, das elastisch verformbar und/oder brechbar ist, überführt werden, wobei der Klebstoff insbesondere ein Harz ist, das vorzugsweise durch Aminhärter aushärtbar ist, und der Klebstoff ebenfalls Bestandteil des nichtleitenden Werkstoffs ist.

10. Verfahren nach Anspruch 9, wobei die Glasfasern vor dem Anordnen zu Bündeln gewickelt werden und die Bündel in den vordefinierten Positionen zueinander angeordnet werden, wobei in mehreren oder allen der Bündel wenigstens eine leitende Faser (14) mit eingewickelt wird.

11. Verfahren nach Anspruch 10, wobei die Wickelgüte der Bündel, in denen eine leitende Faser mit eingewickelt ist, durch ein Radarsystem (42) bestimmt wird.

12. Verfahren zum Prüfen eines Bauteils (108, 22, 33) einer Windenergieanlage (100) nach einem der Ansprüche 1 bis 5, das durch ein Verfahren nach einem der Ansprüche 6 bis 11 hergestellt ist, wobei die Position und/oder Form und/oder Verteilung leitender Fasern im Bauteil vorzugsweise mit einem Radarsystem (41) detektiert werden.

13. Verfahren nach Anspruch 12, wobei das Verfahren das Senden von Radarstrahlen auf das Bauteil und das Erfassen von Radarreflexionen vom Bauteil mit einem Radarsystem (41) umfasst und wobei die Radarreflexionen die Positionen und/oder Formen und/oder Verteilung der leitenden Fasern des nichtleitenden Werkstoffs des Bauteils anzeigen.

14. Verfahren nach Anspruch 12 oder 13, wobei die Radarreflexionen eines Teils des Bauteils (108, 22, 33) oder die Positionen und/oder Formen und/oder Verteilung der leitenden Fasern (14) mit erwarteten Positionen und/oder Formen und/oder Verteilungen der leitenden Fasern (14) verglichen werden und im Falle eines Übereinstimmungsgrades des Vergleichs unterhalb eines ersten Schwellenwerts das Bauteil (108, 22, 33) als fehlerhaft bewertet wird.

## Claims

1. Component for a wind turbine (100), wherein the component (108, 22, 33) primarily comprises a non-conductive material (12) and the component (108, 22, 33) in addition to the primarily non-conductive material (12) has electrically conductive fibres (14) which are introduced into the component, wherein the electrically conductive fibres (14) are arranged in the material (12) in such a manner that the positions and/or shapes and/or distribution thereof, in particular also the local concentration, frequency and/or density thereof are dependent on the position and/or shape and/or distribution of at least a portion of the non-conductive material (12).

2. Component according to claim 1, wherein the component
- is a semi-finished product, in particular a component of a rotor blade (108), preferably a half-shell (33) or a spar flange (16) of a rotor blade (108), of a wind turbine and the non-conductive material (12) comprises glass fibres and preferably a plastics material, foam and/or balsa wood which surrounds the glass fibres or
- is a foundation (22) for the wind turbine (100) and the non-conductive material (12) comprises concrete, or
- is a rotor blade (108) and the non-conductive material (12) comprises glass fibres and an adhesive for connecting two half-shells of the rotor blade (108).

3. Component according to claim 1 or 2, wherein the conductive fibres (14) are metal wires having glass fibres or carbon fibres which are provided or coated with a conductive material.

4. Component according to any one of the preceding claims, wherein the conductive fibres (14) have a diameter of less than 1 mm, preferably less than 100 µm or in a particularly preferred manner less than 50 µm, and/or the conductive fibres (14) have a length of less than 2 cm, preferably less than 1 cm.

5. Component according to any one of the preceding claims, wherein the non-conductive material (12) or at least a portion thereof is of the type of materials which, prior to processing for finishing the component, in particular before curing, can be formed by means of a force, in particular plastically formed, and after processing for producing the component, in particular after curing, is solid, in particular resiliently deformable and/or breakable.

6. Method for producing a component (108, 22, 33) according to any one of claims 1 to 5, wherein during the production electrically conductive fibres (14) are arranged in a non-conductive material (12) which can be formed, in such a manner that the positions and/or shapes and/or distribution thereof after the solidification of the non-conductive material (12) indicates the position and/or the shape and/or the distribution of at least a portion of the non-conductive material (12).

7. Method according to claim 6, wherein in order to produce the component (108, 22, 33) a mixture of non-conductive material (12), in particular a mixture for producing concrete or a liquid adhesive which cures, is mixed with the conductive fibres until a predefined mixing quality of the fibres (14) in the mixture is achieved.

8. Method according to claim 7, wherein the mixing quality is determined by means of a radar system (41).

9. Method according to claim 6, wherein the component (108, 22, 33) is a rotor blade (108), a rotor blade component, in particular a rotor blade half-shell (33) or a spar flange (16) and glass fibres as a component of the non-conductive material (12) are arranged in a predefined position with respect to each other, in particular in or by means of a mould (10), wherein in addition conductive fibres (14), in particular metal wires, glass fibres or carbon fibres which are provided or coated with a conductive material, are arranged at predefined positions of the glass fibres, in particular in the mould (10), and the glass fibres and the conductive fibres are converted with an adhesive into a solid component which is resiliently deformable and/or breakable, wherein the adhesive is in particular a resin which can preferably be cured by means of amine hardeners and the adhesive is also a component of the non-conductive material.

10. Method according to claim 9, wherein the glass fibres before the arrangement are wound into bundles and the bundles are arranged in the predefined positions with respect to each other, wherein at least one conductive fibre (14) is also wound into several or all of the bundles.

11. Method according to claim 10, wherein the winding quality of the bundle in which a conductive fibre is also wound is determined by means of a radar system (42).

12. Method for examination of a component (108, 22, 33) of a wind turbine (100) according to any one of claims 1 to 5, which is produced by a method according to any one of claims 6 to 11, wherein the position and/or shape and/or distribution of conductive fibres in the component are preferably detected with a radar system (41).

13. Method according to claim 12, wherein the method involves transmitting radar beams to the component and detecting radar reflections from the component with a radar system (41), and wherein the radar reflections indicate the positions and/or shapes and/or distribution of the conductive fibres of the non-conductive material of the component.

14. Method according to claim 12 or 13, wherein the radar reflections of a portion of the component (108, 22, 33) or the positions and/or shapes and/or distribution of the conductive fibres (14) are compared with anticipated positions and/or shapes and/or distributions of the conductive fibres (14) and, when a degree of correspondence of the comparison is below a first threshold value, the component (108, 22, 33) is evaluated as being defective.

## Revendications

1. Composant pour une éolienne (100), dans lequel le composant (108, 22, 33) est constitué majoritairement d'un matériau non conducteur (12) et le composant (108, 22, 33) présente, outre le matériau majoritairement non conducteur (12) des fibres (14) électriquement conductrices introduites dans le composant, dans lequel les fibres (14) électriquement conductrices sont disposées de telle manière dans le matériau (12) que leurs positions et/ou leurs formes et/ou leur répartition, en particulier également leur concentration locale, leur fréquence et/ou leur densité dépendent de la position et/ou de la forme et/ou de la répartition d'au moins une partie du matériau non conducteur (12).

2. Composant selon la revendication 1, dans lequel le composant
- est un demi-produit, en particulier une partie d'une pale de rotor (108), de manière préférée une demi-coque (33) ou un longeron (16) d'une pale de rotor (108), d'une éolienne et le matériau non conducteur (12) comprend des fibres de verre et de préférence une matière plastique entourant les fibres de verre, de la mousse et/ou du bois balsa ou
- est une fondation (22) pour l'éolienne (100) et le matériau non conducteur (12) comprend du béton ou
- est une pale de rotor (108) et le matériau non conducteur (12) comprend des fibres de verre et une colle pour assembler deux demi-coques de la pale de rotor (108).

3. Composant selon la revendication 1 ou 2, dans lequel les fibres (14) conductrices sont des fils métalliques, des fibres de verre ou des fibres de carbone pourvues ou revêtues d'un matériau conducteur.

4. Composant selon l'une quelconque des revendications précédentes, dans lequel les fibres (14) conductrices présentent un diamètre inférieur à 1 mm, de préférence inférieur à 100 µm ou de manière particulièrement préférée inférieur à 50 µm, et/ou les fibres (14) conductrices présentent une longueur inférieure à 2 cm, de préférence inférieure à 1 cm.

5. Composant selon l'une quelconque des revendications précédentes, dans lequel le matériau non conducteur (12) ou au moins une partie de celui-ci est du type de matériaux, qui peut être moulé, en particulier peut être moulé de manière plastique avant le traitement pour finaliser le composant, en particulier avant le durcissement, par une force et peut être déformé de manière solide, en particulier de manière élastique et/ou peut être cassé après le traitement pour fabriquer le composant, en particulier après le durcissement.

6. Procédé pour fabriquer un composant (108, 22, 33) selon l'une quelconque des revendications 1 à 5, dans lequel des fibres (14) électriquement conductrices sont disposées lors de la fabrication de telle manière dans un matériau non conducteur (12), qui peut être moulé, de sorte que leurs positions et/ou leurs formes et/ou leur répartition indiquent après la solidification du matériau non conducteur (12) la position et/ou la forme et/ou la répartition d'au moins une partie du matériau non conducteur (12).

7. Procédé selon la revendication 6, dans lequel un mélange composé d'un matériau non conducteur (12), en particulier un mélange pour fabriquer du béton ou une colle liquide, qui peut être durcie, est mélangé ou mélangée aux fibres conductrices pour fabriquer le composant (108, 22, 33) jusqu'à atteindre une qualité de mélange prédéfinie des fibres (14) dans le mélange.

8. Procédé selon la revendication 7, dans lequel la qualité de mélange est définie par un système radar (41).

9. Procédé selon la revendication 6, dans lequel le composant (108, 22, 33) est une pale de rotor (108), une partie de pale de rotor, en particulier une demi-coque de pale de rotor (33) ou un longeron (16), et des fibres de verre sont disposées en tant que partie constitutive du matériau non conducteur (12) dans une position prédéfinie les unes par rapport aux autres, en particulier dans ou à l'aide d'un moule (10), dans lequel en supplément des fibres (14) conductrices, en particulier des fils métalliques, des fibres de verre ou des fibres de carbone pourvues ou revêtues d'un matériau conducteur sont disposés sur des positions prédéfinies des fibres de verre, en particulier dans le moule (10) et les fibres de verre ainsi que les fibres conductrices sont transférées avec une colle dans un composant solide, qui peut être déformé élastiquement et/ou peut être cassé, dans lequel la colle est en particulier une résine, qui peut être durcie de préférence par des durcisseurs amines, et la colle est également une partie constitutive du matériau non conducteur.

10. Procédé selon la revendication 9, dans lequel les fibres de verre sont enroulées avant l'agencement en des faisceaux et les faisceaux sont disposés dans les positions prédéfinies les uns par rapport aux autres, dans lequel au moins une fibre conductrice (14) est enroulée dans plusieurs ou tous les faisceaux.

11. Procédé selon la revendication 10, dans lequel la qualité d'enroulement des faisceaux, dans lesquels une fibre conductrice est enroulée, est définie par un système radar (42).

12. Procédé de contrôle d'un composant (108, 22, 33) d'une éolienne (100) selon l'une quelconque des revendications 1 à 5, qui est fabriqué par un procédé selon l'une quelconque des revendications 6 à 11, dans lequel la position et/ou la forme et/ou la répartition de fibres conductrices sont détectées de préférence avec un système radar (41).

13. Procédé selon la revendication 12, dans lequel le procédé comprend l'envoi de faisceaux radar sur le composant et la détection de réflexions radar du composant avec un système radar (41), et dans lequel les réflexions radar indiquent les positions et/ou les formes et/ou la répartition des fibres conductrices du matériau non conducteur du composant.

14. Procédé selon la revendication 12 ou 13, dans lequel les réflexions radar d'une partie du composant (108, 22, 33) ou les positions et/ou les formes et/ou la répartition des fibres (14) conductrices sont comparées à des positions et/ou des formes et/ou des répartitions attendues des fibres (14) conductrices, et dans le cas d'un degré de concordance de la comparaison inférieur à une première valeur de seuil, le composant (108, 22, 33) est évalué comme étant défectueux.
